# EUROPEAN PATENT SPECIFICATION

(11) **EP 4 428 444 B1**
(45) Date of publication and mention of the grant of the patent: **29.04.2026**
(21) Application number: 24162487.3
(22) Date of filing: 08.03.2024
(51) Int. Cl.: F23R 3/34, F02C 7/264

(54) **RADIALLY ORIENTED INTERNALLY MOUNTED CONTINUOUS IGNITION DEVICE**
RADIAL ORIENTIERTE INNEN MONTIERTE KONTINUIERLICHE ZÜNDUNGSVORRICHTUNG
DISPOSITIF D'ALLUMAGE CONTINU MONTE A L'INTERIEUR ET A ORIENTATION RADIALE

(30) Priority: 10.03.2023 US 202318120183
(43) Date of publication of application: 11.09.2024
(73) Proprietor: Collins Engine Nozzles, Inc., West Des Moines, IA 50265 (US)
(72) Inventor: RYON, Jason A., Carlisle, IA 50047 (US); WILLIAMS, Brandon P., Johnston, IA 50131 (US); PROCIW, Lev A., Johnston, IA 50131 (US)
(74) Representative: Dehns

(56) References cited:
- US-A1- 2022 195 933
- US-A1- 2022 195 934
- US-A1- 2022 364 516

## Description

### BACKGROUND

The present disclosure relates to gas turbine engines and, more particularly, to orientations of torch igniters used in the combustor section of a gas turbine engine.

Torch igniters can be used in lieu of spark igniters to provide an ignition source for combustors located in gas turbine engines. Torch igniters provide a flame as an ignition source for a combustor rather than the electric current provided by spark igniters. Torch igniters mounted externally to a high pressure case of the gas turbine engine must be able to withstand a high pressure differential to prevent leaks. Mounting torch igniters within a high pressure case of the gas turbine engine does not require the torch igniters to withstand this high pressure differential. However, torch igniters mounted within the high pressure case can experience extremely high temperatures during engine operation. These high temperature conditions can damage temperature-sensitive elements of the torch igniter. US 2022/195933 A1, US 2022/195934 A1 and US 2022/364516 A1 all describe a combustor assembly that include a torch igniter.

### SUMMARY

A torch igniter for a for a combustor of a gas turbine engine is provided, as defined by claim 1.

A combustor of a gas turbine engine is provided, as defined by claim 7.

### BRIEF DESCRIPTION OF THE DRAWINGS

FIG. 1 is a cross-sectional view of an example of a combustor of a gas turbine engine containing a torch igniter.
FIG. 2 is a cross-sectional close-up view of an example of the torch igniter of FIG. 1.
FIG. 3 is a cross-sectional view of an example of a cap section of the torch igniter of FIGS. 1 and 2.
FIG. 4 is a cross-sectional view of an example of an elbow region of the torch igniter of FIGS. 1 and 2.
FIG. 5 is a perspective cutaway view of an example of the torch igniter of FIGS. 1 and 2 mounted on a combustor dome.

### DETAILED DESCRIPTION

The present disclosure provides structures for a combustor of a gas turbine engine containing a torch igniter. The mounting of a torch igniter partially within the high pressure section of a gas turbine engine prevents stress on the combustion chamber of the torch igniter while preventing damage to temperature-sensitive components of the torch igniter, and does not require the torch igniter to be built to withstand a high pressure differential.

The pressure differential experienced by the torch igniter - the difference between the pressure at the exterior of the torch igniter and the pressure within the interior volume of the torch igniter - is determined by the location of the torch igniter. The structural walls of the torch igniter can experience a pressure differential exceeding 55 bars (800 pounds per square inch) when a torch igniter is mounted externally to the high pressure case. When the torch igniter is mounted inside the high pressure case, the pressure differential is much lower as the pressure outside the torch igniter is much closer to the internal pressure within the torch igniter. This allows a torch igniter situated within the high pressure case to have thinner structural walls, and additionally allows torch igniter ruptures to be contained within the case.

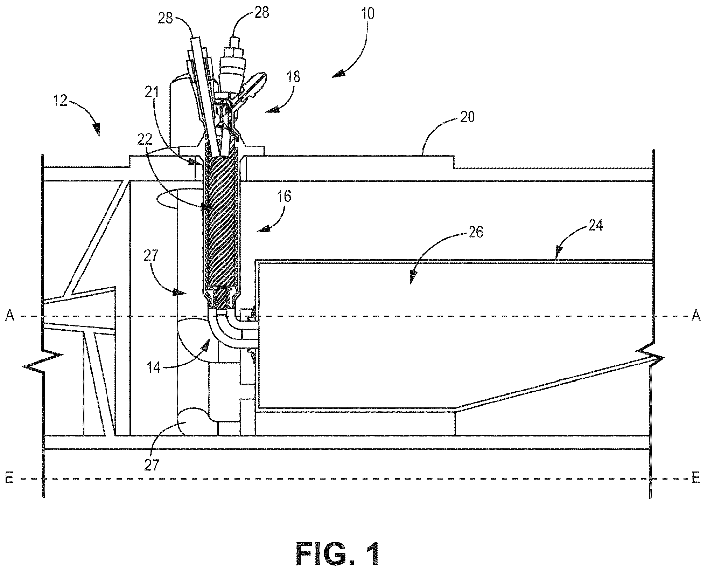

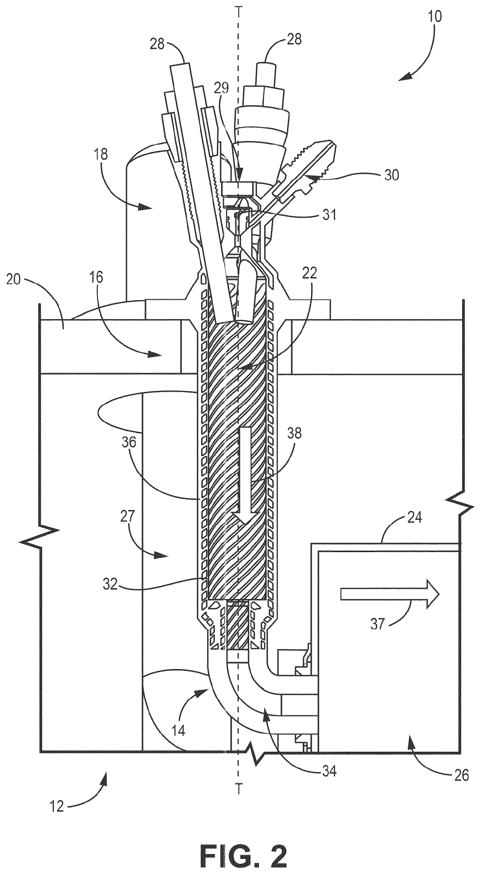

FIG. 1 is a cross-sectional view of torch igniter 10 disposed within engine combustor section 12 of a gas turbine engine. Torch igniter 10 is composed of tip 14, combustion section 16, and cap 18. Torch igniter 10 extends into high pressure case 20 through torch igniter opening 21, such that combustion chamber 22 of torch igniter 10 is located inside high pressure case 20. Tip 14 of torch igniter 10 is situated within high pressure case 20 and is mounted through liner 24 of combustor 26. Fuel nozzles 27 provide fuel to combustor 26. The gas turbine engine is arranged such that high pressure case 20, liner 24, and combustor 26 are disposed circumferentially about engine axis E-E. Engine axis E-E is a rotational axis of the gas turbine engine. Primary combustor centerline A-A is a centerline for the two-dimensional cross section of engine combustor section 12 shown in FIG. 1. Cap 18 of torch igniter 10 is situated outside high pressure case 20. The example of torch igniter 10 in FIG. 1 is shown as receiving glow plugs 28. Glow plugs 28 are surface igniters which can be resistively heated to ignite fuel from a fuel injector and create combustion within torch igniter 10, creating a flame within combustion chamber 22. Torch igniter 10 intakes air from air inlet section 29 (shown in FIGS. 2-3) disposed in cap 18 of torch igniter 10, and cap 18 is also configured to intake fuel through fuel inlet fitting 30 (shown in FIGS. 2-3). Fuel injector section 31 (shown in FIGS. 2-3) receives air from air inlet section 29 and fuel from fuel inlet fitting 30 in order to atomize the fuel before it enters combustion chamber 22. A portion of the air from air inlet section 29 can be directed through cooling channels between igniter wall 32 and structural wall 36 (both shown in FIGS. 2-4). The air can be high-pressure air from the high-pressure section of the gas turbine engine, or can be from an auxiliary compressor. Combustion chamber 22 is in fluid communication with an internal volume of combustor 26 via an outlet within tip 14, allowing the flame created within combustion chamber 22 to reach the interior of combustor 26 and thereby ignite fuel within combustor 26. Torch igniter 10 can serve as an initial ignition mechanism for combustor 26, as a stabilizer of fuel combustion within combustor 26, or as a relight mechanism for combustor 26. In the example shown in FIG. 1, torch igniter 10 is oriented such that tip 14 is mounted through liner 24, combustion chamber 22 is within high pressure case 20, and cap 18 extends through high pressure case 20.

FIG. 2 is a cross-sectional view of torch igniter 10. Igniter wall 32 is a housing which surrounds the internal volume of torch igniter 10, which includes combustion chamber 22 and outlet passage 34, such that igniter wall 32 runs from the end of tip 14 to cap 18. Igniter wall 32 can be annular where it surrounds combustion chamber 22 and outlet passage 34, and can be dome- or cone-shaped where it extends to cap 18. In the depicted example, igniter wall 32 has a larger diameter where it surrounds combustion chamber 22 than where it surrounds outlet passage 34. Structural wall 36 coaxially surrounds igniter wall 32, and can be separated from igniter wall 32 by cooling channels. Igniter wall 32 is shown transparent in the cross section of FIGS. 1 and 2 for ease of viewing.

Structural wall 36 can, for example, have a thickness of between 0.5 and 1.3 mm (0.02 to 0.05 inches) due to the location of torch igniter 10 within high pressure case 20. Atmospheric air pressure typically ranges from approximately 0.34 bars (5 PSI) at altitude to approximately 1 bar (15 PSI) at sea level. High pressure case 20 can, for example, be rated for a pressure ratio of approximately 60:1, and can consequently produce a pressure within high pressure case 20 of up to 58 bars (840 PSI) in an exemplary case. A torch igniter mounted externally to high pressure case 20 would similarly need to be rated for the pressure ratio of approximately 60:1. This externally mounted torch igniter could experience a pressure differential exceeding 55 bars (800 PSI) (the difference between atmospheric air pressure and the internal pressure within the torch igniter, which is approximately the pressure within the high pressure case), and would consequently require a structural wall thickness of approximately 3.8 mm (0.15 inches) to approximately 6.6 mm (0.3 inches) to withstand this pressure differential.
Because torch igniter 10 is mounted such that combustion chamber 22 is within high pressure case 20, structural wall 36 can be thinner than would be required of structural walls for torch igniters mounted externally to high pressure case 20, because torch igniter 10 does not need to withstand the pressure difference between the air inside high pressure case 20 and the air outside high pressure case 20. The construction of torch igniter 10 can therefore account for the pressure level within high pressure case 20, where the pressure difference between the internal volume of torch igniter 10 and the external surface of torch igniter 10 is much lower than for a torch igniter located outside a high pressure case. The reduced thickness of structural wall 36 made possible by the mounting location of torch igniter 10 (relative to external mounting) reduces overall part bulk and weight, which are important considerations in aerospace applications. Additionally, the mounting of torch igniter 10 such that combustion chamber 22 is located within high pressure case 20 allows for containment of fuel in the case of rupture or other failure of components of torch igniter 10.

Combustor flow direction 37 shows the general direction of flow for fluids within engine combustor section 12. Torch igniter 10 is arranged such that combustion section 16 and cap 18 are oriented coaxially about torch igniter axis T-T. In the depicted embodiment, torch igniter axis T-T is oriented approximately perpendicular to primary combustor centerline A-A. Igniter flow direction 38 shows the general direction of flow for fluids within combustion chamber 22 of torch igniter 10. Thus, torch igniter 10 has upstream and downstream ends oriented along torch igniter axis T - T and according to the direction of igniter flow direction 38. Air inlet section 29 is located within structural wall 36 and igniter wall 32 such that air inlet section 29 feeds into combustion chamber 22 directly. Combustion chamber 22, air inlet section 29, and outlet passage 34 are fluidly connected such that combustion products are able to flow from air inlet section 29, through combustion chamber 22 toward tip 14, and to outlet passage 34. Combustion products are able to exit torch igniter 10 and enter an internal volume of a main combustor, such as combustor 26, via outlet passage 34. To this extent, cap 18 is disposed at the upstream end of torch igniter 10 and tip 14 is disposed at the downstream end of torch igniter 10. It should be understood, however, that tip 14 can be disposed at any suitable location on the downstream end of torch igniter 10.

As described above in reference to FIG. 1, air inlet section 29 can receive high pressure air from an auxiliary compressor (that is, a compressor other than the main compressor which provides air to engine combustor section 12), which in some examples can be connected to an auxiliary power source. In the case of low power starts and/or engine blowout, this auxiliary compressor can provide the necessary mass of air to torch igniter 10 in order to restart the gas turbine engine.

Torch igniter 10 can operate with fuel flow rates as low as approximately 1 pound per hour, and generally operates with fuel flow rates of between 0.45 and 4.5 kg (1 and 10 pounds) per hour. Torch igniter 10 can intake an amount of air to achieve a fuel-to-air ratio of approximately 1:10. An auxiliary compressor can compress the air flow to a higher pressure, and correspondingly a smaller volume, before it enters air inlet section 29. This can facilitate a smaller size for torch igniter 10 than a torch igniter which is fed off the main compressor. The smaller size and volume of torch igniter 10 allows torch igniter 10 to be placed in locations which are less able to accommodate a larger torch igniter, such as inside high pressure case 20.

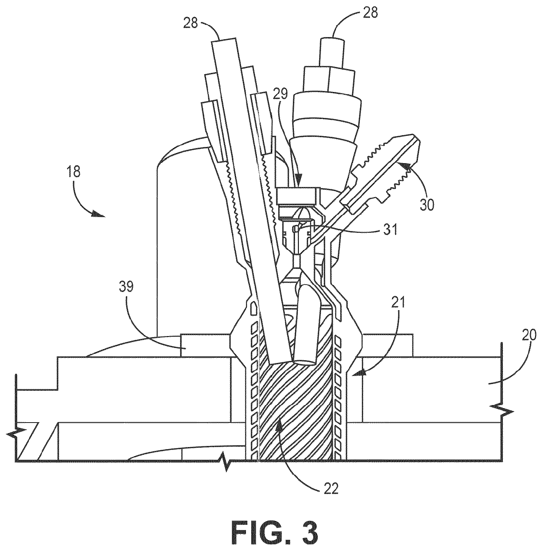

FIG. 3 is a cross-sectional view of cap 18 of torch igniter 10. During operation, torch igniter 10 causes combustion within combustion chamber 22 by using a fuel injector to inject a fuel-air mixture that impinges on the surface of glow plug 28. Glow plugs 28 extend through cap 18, such that each glow plug 28 has an internal end and an external end with respect to torch igniter 10. Further, glow plugs 28 can be resistively heated such that they are able to ignite the fuel-air mixture injected through fuel inlet fitting 30 when the fuel-air mixture impinges on the internal ends of glow plugs 28.

In the depicted embodiment, torch igniter 10 is configured to receive three glow plugs 28. However, in other embodiments, torch igniter 10 can be configured to receive one glow plug 28, two glow plugs 28, more than three glow plugs 28, and/or a suitable minimum ignition energy source/device (such as one or more spark plugs). It can be desirable for torch igniter 10 to be configured with multiple glow plugs at multiple locations within combustion chamber 22 to improve ignition of fuel injected through fuel inlet fitting 30. Further, if the injection pattern through fuel inlet fitting 30 is distorted, using multiple glow plugs 28 at multiple locations within combustion chamber 22 can improve the likelihood that the injected fuel impinges on at least one glow plug 28.

Glow plugs 28 are also connected to a power source capable of delivering electric current to the external ends of glow plugs 28, allowing for the electrically-resistive heating of glow plugs 28. In examples where torch igniter 10 contains multiple glow plugs 28, they can be connected to more than one power source or can be connected in series, parallel, or a combination of arrangements to a single power source. Generally, glow plugs 28 are formed of a material capable of being resistively heated. For example, glow plugs 28 can be formed of a ceramic material, such as silicon nitride.

Torch igniter 10 is secured within torch igniter opening 21 by flange 39. Flange 39 circumferentially surrounds torch igniter 10. Flange 39 can be fastened to high pressure case 20 by one or more connectors such as screw-on nuts, bolts, or screws, and can be sealed by sealing devices such as C seals (not shown) to prevent leaks between the flange 39 and high pressure case 20.

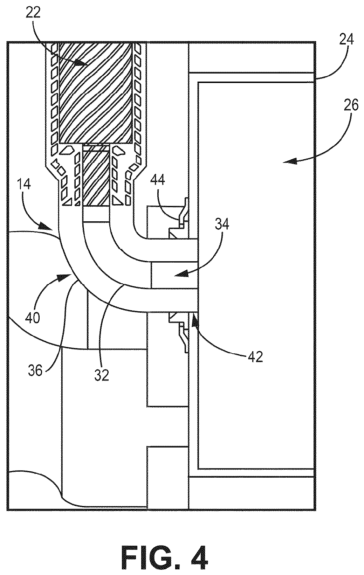

FIG. 4 is a cross-sectional view of tip 14 of torch igniter 10. Tip 14 consists of elbow 40, igniter wall 32, structural wall 36, and outlet passage 34. Tip 14 is mounted to liner 24 at liner opening 42 and is secured within liner opening 42 by liner seal 44. Liner seal 44 can consist of any suitable seal, such as floating seal collars. The amount of allowed float for liner seal 44 can vary based on tolerances and thermal growth differences. Tip 14 can be slip fit to liner seal 44. Elbow 40 can be cooled by the use of cooling channels within torch igniter 10. In the depicted example, elbow 40 turns approximately 90° between combustion chamber 22 of torch igniter 10 and liner 24 of combustor 26. However, it should be understood that elbow 40 can bend at any suitable angle, including non-90° angles. Most generally, elbow 40 has a shape and orientation suitable to redirect igniter flow from igniter flow direction 38 into combustor 26 and in some embodiments towards combustor flow direction 37.

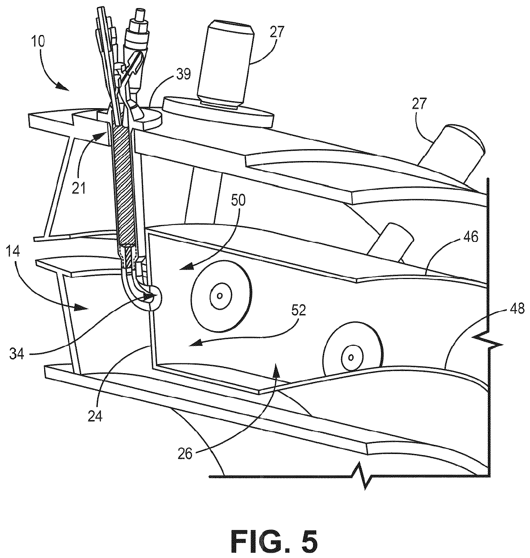

FIG. 5 is a cutaway view of torch igniter 10 mounted to liner 24. Torch igniter 10 is secured within torch igniter opening 21 by flange 39. In the depicted embodiment, tip 14 of torch igniter 10 is approximately equidistant from external edge 46 and internal edge 48 of liner 24. However, tip 14 of torch igniter 10 can be mounted through various other sections of liner 24 in order to optimize the ability of torch igniter 10 to ignite, stabilize, or relight combustor 26. For example, it might be advantageous to situate torch igniter 10 such that tip 14 can ignite fuel in outer recirculation zone 50 or inner recirculation zone 52 of combustor 26 in order to stabilize combustion within combustor 26. The location of tip 14 with respect to fuel nozzles 27 can also be varied to optimize the efficacy of torch igniter 10. In the example depicted in FIG. 5, tip 14 is at an upstream end of liner 24 and interfaces with combustor 26 through the dome wall. This provides an advantage over examples which mount the torch igniter through the side walls of the combustor, which can disrupt cooling of the side walls.

The internal volume of a torch igniter mounted external to the high pressure case of a combustor experiences much higher pressure and temperatures than the external surface of the torch igniter. This can cause stress on the torch igniter, particularly on the igniter wall and structural wall, and can increase the risk of rupture or other mechanical failure. Mounting a torch igniter such that the combustion chamber is within the high pressure case is therefore desirable to avoid strain on the structural components of the torch igniter. Situating the combustion chamber internally also allows for containment within the high pressure case if the torch igniter ruptures. With the torch igniter positioned through the high pressure case, pressure- and temperature-sensitive elements such as electrical connections to a power source can be located outside the case. This orientation combines the advantages of mounting schemes which are completely external and ones which are completely internal.

### Discussion of Possible Embodiments

The following are non-exclusive descriptions of possible embodiments of the present invention.

An example of an embodiment of a combustor of a gas turbine engine oriented along an engine axis, among other possible things includes a combustor case extending along a primary combustor centerline to convey compressed airflow from a compressor to a turbine section, a combustor liner disposed within the combustor case to define a main combustor zone, at least one fuel nozzle situated at an upstream end of the combustor liner relative to the primary combustor axis, and a torch igniter situated partially within the combustor case. The combustor case includes a torch igniter opening. The torch igniter includes a combustion chamber extending along a torch igniter axis and having axially upstream and downstream ends defining a flow direction through the combustion chamber with respect to the torch igniter axis, a cap defining the axially upstream end of the combustion chamber with respect to the torch igniter axis and configured to receive at least one surface igniter and at least one fuel injector, a tip defining the axially downstream end of the combustion chamber with respect to the torch igniter axis, an annular igniter wall extending along and surrounding the torch igniter axis from the cap to the tip and defining a radial extent of the combustion chamber, a structural wall coaxial with and surrounding the igniter wall, and an outlet passage defined by the igniter wall within the tip and fluidly connected to the combustion chamber. The torch igniter is situated within the torch igniter opening such that the tip is mounted through the combustor liner, the combustion chamber is within the combustor case, and the cap extends through the combustor case.

The combustor of the preceding paragraph can optionally include, additionally and/or alternatively, any one or more of the following features, configurations and/or additional components:

A further embodiment of the foregoing combustor, wherein the torch igniter is oriented such that the torch igniter axis extends radially inward with respect to the primary combustor centerline and the engine axis.

A further embodiment of any of the foregoing combustors, wherein the tip comprises an elbow between the combustion chamber and the combustor liner.

A further embodiment of any of the foregoing combustors, wherein the elbow turns 90 degrees from the combustion chamber to the combustor liner.

A further embodiment of any of the foregoing combustors, wherein a flange is connected to the combustor case and secures the torch igniter within the torch igniter opening and to the combustor case.

A further embodiment of any of the foregoing combustors, wherein the tip of the torch igniter is mounted to the combustor liner at an axially upstream end of the combustor liner with respect to the primary combustor centerline.

A further embodiment of any of the foregoing combustors, wherein the torch igniter ignites fuel in an outer recirculation zone of the combustor.

A further embodiment of any of the foregoing combustors, wherein the torch igniter ignites fuel in an inner recirculation zone of the combustor.

A further embodiment of any of the foregoing combustors, wherein the torch igniter axis is oriented perpendicular to the primary combustor centerline.

A further embodiment of any of the foregoing combustors, wherein the cap is configured to receive at least three surface igniters.

A further embodiment of any of the foregoing combustors, wherein the torch igniter is positioned between two fuel nozzles of the combustor.

An example of an embodiment of a torch igniter for a combustor of a gas turbine engine includes a combustion chamber extending along a torch igniter axis and having axially upstream and downstream ends defining a flow direction through the combustion chamber with respect to the torch igniter axis, a cap defining the axially upstream end of the combustion chamber with respect to the torch igniter axis and configured to receive at least one surface igniter and at least one fuel injector, a tip defining the axially downstream end of the combustion chamber with respect to the torch igniter axis, an annular igniter wall extending along and surrounding the torch igniter axis from the cap to the tip and defining a radial extent of the combustion chamber, a structural wall coaxial with and surrounding the igniter wall, and an outlet passage defined by the igniter wall within the tip and fluidly connected to the combustion chamber. The structural wall and the igniter wall are configured for a pressure level within a combustor case of the combustor during operation of the combustor.

A further embodiment of the foregoing torch igniter, wherein the tip includes an elbow downstream of the combustion chamber.

A further embodiment of any of the foregoing torch igniters, wherein the elbow turns 90 degrees with respect to the torch igniter axis.

A further embodiment of any of the foregoing torch igniters, wherein a flange is connected to a combustor case of the gas turbine engine and secures the torch igniter within an opening of the combustor case.

A further embodiment of any of the foregoing torch igniters, wherein the torch igniter ignites fuel in an outer recirculation zone of the combustor.

A further embodiment of any of the foregoing torch igniters, wherein the torch igniter ignites fuel in an inner recirculation zone of the combustor.

A further embodiment of any of the foregoing torch igniters, wherein the cap is configured to receive at least three surface igniters.

A further embodiment of any of the foregoing torch igniters, wherein the combustor case extends along a primary combustor centerline and the torch igniter is oriented such that the torch igniter axis extends radially inward with respect to the primary combustor centerline.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A torch igniter (10) for a combustor (26) of a gas turbine engine, the torch igniter (10) comprising:
a combustion chamber (22) extending along a torch igniter axis, the combustion chamber (22) having axially upstream and downstream ends defining a flow direction through the combustion chamber (22) with respect to the torch igniter axis;
a cap (18) defining the axially upstream end of the combustion chamber (22) with respect to the torch igniter axis, wherein the cap (18) is configured to receive at least one surface igniter (28) and at least one fuel injector;
a tip (14) defining the axially downstream end of the combustion chamber (22) with respect to the torch igniter axis;
an annular igniter wall (32) extending along and surrounding the torch igniter axis from the cap (18) to the tip (14) and defining a radial extent of the combustion chamber (22);
a structural wall (36) coaxial with and surrounding the igniter wall (32); and
an outlet passage (34) defined by the igniter wall (32) within the tip (14), wherein the outlet passage (34) is fluidly connected to the combustion chamber (22);
wherein the structural wall (36) and the igniter wall (32) are configured for a pressure level within a combustor case (20) of the combustor (26) during operation of the combustor (26), wherein
an air inlet section (29) : is located within structural wall (36) and igniter wall (32), such that said air inlet section (29) feeds into the combustion chamber (22) directly; and **characterized in that**
a fuel injector section (31) receives air from the air inlet section (29) and fuel inlet fitting (30) and atomizes the fuel before it enters the combustion chamber (22).

2. The torch igniter (10) of claim 1, wherein the tip (14) comprises an elbow (40) downstream of the combustion chamber (22), and optionally wherein the elbow (40) turns 90 degrees with respect to the torch igniter axis.

3. The torch igniter (10) of claim 1 or 2, wherein a flange (39) is connected to the combustor case (20) of the gas turbine engine and secures the torch igniter (10) within an opening of the combustor case (20).

4. The torch igniter (10) of claim 1, 2 or 3, wherein the torch igniter (10) is suitable to ignite fuel in an outer recirculation zone (50) of the combustor (26), or wherein the torch igniter (10) is suitable to ignite fuel in an inner recirculation zone (52) of the combustor (26).

5. The torch igniter (10) of any of claims 1 to 4, wherein the cap (18) is configured to receive at least three surface igniters (28).

6. The torch igniter (10) of any of claims 1 to 5, wherein the combustor case (20) extends along a primary combustor centerline and the torch igniter (10) is oriented such that the torch igniter axis extends radially inward with respect to the primary combustor centerline.

7. The combustor of a gas turbine engine oriented about an engine axis, the combustor comprising:
the torch igniter (10) of claim 1;
the combustor case (20) extending along the primary combustor centerline to convey compressed airflow from a compressor to a turbine section, wherein the combustor case (20) comprises the torch igniter (10) opening;
a combustor liner (24) disposed within the combustor case (20) to define a main combustor zone;
at least one fuel nozzle (27) situated at an upstream end of the combustor liner (24), relative to the primary combustor centerline; and
wherein the torch igniter (10) is situated within the torch igniter opening such that the tip (14) is mounted through the combustor liner (24), the combustion chamber (22) is within the combustor case (20), and the cap (18) extends through the combustor case (20).

8. The combustor of claim 7, wherein the torch igniter (10) is oriented such that the torch igniter axis extends radially inward with respect to the primary combustor centerline and the engine axis.

9. The combustor of claim 7 or 8, wherein the tip (14) comprises the elbow (40) between the combustion chamber (22) and the combustor liner (24), and optionally wherein the elbow (40) turns 90 degrees from the combustion chamber (22) to the combustor liner (24).

10. The combustor of claims 3 and 7, wherein the flange (39) is connected to the combustor case (20) and secures the torch igniter (10) within the torch igniter (10) opening and to the combustor case (20).

11. The combustor of claim 7, wherein the tip (14) of the torch igniter (10) is mounted to the combustor liner (24) at an axially upstream end of the combustor liner (24) with respect to the primary combustor centerline.

12. The combustor of claim 11, wherein the torch igniter (10) ignites fuel in the outer recirculation zone (50) of the combustor (26), or wherein the torch igniter (10) ignites fuel in the inner recirculation zone (52) of the combustor (26).

13. The combustor of claim 7, wherein the torch igniter axis is oriented perpendicular to the primary combustor centerline.

14. The combustor of any preceding claim, wherein the cap (18) is configured to receive at least three surface igniters (28).

15. The combustor of claim 7, wherein the torch igniter (10) is positioned between two fuel nozzles (27) of the combustor (26).

## Patentansprüche

1. Fackelzünder (10) für eine Brennkammer (26) eines Gasturbinenmotors, wobei der Fackelzünder (10) umfasst:
einen Brennraum (22), der sich entlang einer Fackelzünderachse erstreckt, wobei der Brennraum (22) axial stromaufwärts und stromabwärts gelegene Enden aufweist, die eine Strömungsrichtung durch den Brennraum (22) in Bezug auf die Fackelzünderachse definieren;
eine Kappe (18), die das axial stromaufwärts gelegene Ende des Brennraums (22) in Bezug auf die Fackelzünderachse definiert, wobei die Kappe (18) zum Aufnehmen von mindestens einem Oberflächenzünder (28) und mindestens einer Kraftstoffeinspritzdüse ausgelegt ist;
eine Spitze (14), die das axial stromabwärts gelegene Ende des Brennraums (22) in Bezug auf die Fackelzünderachse definiert;
eine ringförmige Zünderwand (32), die sich entlang der Fackelzünderachse erstreckt und diese umgibt, von der Kappe (18) zur Spitze (14), und eine radiale Ausdehnung des Brennraums (22) definiert;
eine Strukturwand (36), die koaxial zu der Zünderwand (32) ist und diese umgibt; und
einen Auslasskanal (34), der durch die Zünderwand (32) innerhalb der Spitze (14) definiert ist, wobei der Auslasskanal (34) mit dem Brennraum (22) strömungsverbunden ist;
wobei die Strukturwand (36) und die Zünderwand (32) für ein Druckniveau innerhalb eines Brennkammergehäuses (20) der Brennkammer (26) während des Betriebs der Brennkammer (26) ausgelegt sind, wobei
ein Lufteinlassabschnitt (29): sich innerhalb der Strukturwand (36) und der Zünderwand (32) befindet, so dass der Lufteinlassabschnitt (29) direkt in den Brennraum (22) einspeist; und **dadurch gekennzeichnet, dass**
ein Kraftstoffeinspritzabschnitt (31) Luft von dem Lufteinlassabschnitt (29) und Kraftstoffeinlassstutzen (30) aufnimmt und den Kraftstoff zerstäubt, bevor er in den Brennraum (22) eintritt.

2. Fackelzünder (10) nach Anspruch 1, wobei die Spitze (14) einen Bogen (40) stromabwärts des Brennraums (22) umfasst, und optional wobei der Bogen (40) um 90 Grad in Bezug auf die Fackelzünderachse abbiegt.

3. Fackelzünder (10) nach Anspruch 1 oder 2, wobei ein Flansch (39) mit dem Brennkammergehäuse (20) des Gasturbinenmotors verbunden ist und den Fackelzünder (10) innerhalb einer Öffnung des Brennkammergehäuses (20) sichert.

4. Fackelzünder (10) nach Anspruch 1, 2 oder 3, wobei der Fackelzünder (10) geeignet ist, Kraftstoff in einer äußeren Rezirkulationszone (50) der Brennkammer (26) zu zünden, oder wobei der Fackelzünder (10) geeignet ist, Kraftstoff in einer inneren Rezirkulationszone (52) der Brennkammer (26) zu zünden.

5. Fackelzünder (10) nach einem der Ansprüche 1 bis 4, wobei die Kappe (18) zum Aufnehmen von mindestens drei Oberflächenzündern (28) ausgelegt ist.

6. Fackelzünder (10) nach einem der Ansprüche 1 bis 5, wobei sich das Brennkammergehäuse (20) entlang einer Hauptbrennkammermittellinie erstreckt und der Fackelzünder (10) so ausgerichtet ist, dass sich die Fackelzünderachse radial nach innen in Bezug auf die Hauptbrennkammermittellinie erstreckt.

7. Brennkammer eines Gasturbinenmotors, der um eine Triebwerksachse ausgerichtet ist, wobei die Brennkammer umfasst:
den Fackelzünder (10) nach Anspruch 1;
das Brennkammergehäuse (20), das sich entlang der Hauptbrennkammermittellinie erstreckt, um verdichteten Luftstrom von einem Verdichter zu einem Turbinenabschnitt zu leiten, wobei das Brennkammergehäuse (20) die Fackelzünder (10) Öffnung umfasst;
eine Brennkammerauskleidung (24), die innerhalb des Brennkammergehäuses (20) angeordnet ist, um eine Hauptbrennkammerzone zu definieren;
mindestens eine Kraftstoffdüse (27), die an einem stromaufwärts gelegenen Ende der Brennkammerauskleidung (24) in Bezug auf die Hauptbrennkammermittellinie angeordnet ist; und
wobei der Fackelzünder (10) innerhalb der Fackelzünderöffnung so angeordnet ist, dass die Spitze (14) durch die Brennkammerauskleidung (24) montiert ist, der Brennraum (22) sich innerhalb des Brennkammergehäuses (20) befindet und die Kappe (18) sich durch das Brennkammergehäuse (20) erstreckt.

8. Brennkammer nach Anspruch 7, wobei der Fackelzünder (10) so ausgerichtet ist, dass sich die Fackelzünderachse radial nach innen in Bezug auf die Hauptbrennkammermittellinie und die Triebwerksachse erstreckt.

9. Brennkammer nach Anspruch 7 oder 8, wobei die Spitze (14) den Bogen (40) zwischen dem Brennraum (22) und der Brennkammerauskleidung (24) umfasst, und optional wobei der Bogen (40) um 90 Grad von dem Brennraum (22) zur Brennkammerauskleidung (24) abbiegt.

10. Brennkammer nach den Ansprüchen 3 und 7, wobei der Flansch (39) mit dem Brennkammergehäuse (20) verbunden ist und den Fackelzünder (10) innerhalb der Fackelzünder (10) Öffnung und an dem Brennkammergehäuse (20) sichert.

11. Brennkammer nach Anspruch 7, wobei die Spitze (14) des Fackelzünders (10) an der Brennkammerauskleidung (24) an einem axial stromaufwärts gelegenen Ende der Brennkammerauskleidung (24) in Bezug auf die Hauptbrennkammermittellinie montiert ist.

12. Brennkammer nach Anspruch 11, wobei der Fackelzünder (10) Kraftstoff in der äußeren Rezirkulationszone (50) der Brennkammer (26) zündet, oder wobei der Fackelzünder (10) Kraftstoff in der inneren Rezirkulationszone (52) der Brennkammer (26) zündet.

13. Brennkammer nach Anspruch 7, wobei die Fackelzünderachse senkrecht zur Hauptbrennkammermittellinie ausgerichtet ist.

14. Brennkammer nach einem der vorhergehenden Ansprüche, wobei die Kappe (18) zum Aufnehmen von mindestens drei Oberflächenzündern (28) ausgelegt ist.

15. Brennkammer nach Anspruch 7, wobei der Fackelzünder (10) zwischen zwei Kraftstoffdüsen (27) der Brennkammer (26) positioniert ist.

## Revendications

1. Allumeur torche (10) pour un combusteur (26) d'un moteur à turbine à gaz, l'allumeur torche (10) comprenant :
une chambre de combustion (22) s'étendant le long d'un axe d'allumeur torche, la chambre de combustion (22) présentant des extrémités amont et aval axiales définissant une direction d'écoulement à travers la chambre de combustion (22) par rapport à l'axe d'allumeur torche ;
un capuchon (18) définissant l'extrémité amont axiale de la chambre de combustion (22) par rapport à l'axe d'allumeur torche, le capuchon (18) étant configuré pour recevoir au moins un allumeur de surface (28) et au moins un injecteur de carburant ;
un bout (14) définissant l'extrémité aval axiale de la chambre de combustion (22) par rapport à l'axe d'allumeur torche ;
une paroi d'allumeur (32) annulaire s'étendant le long et entourant l'axe d'allumeur torche à partir du capuchon (18) vers le bout (14) et définissant une étendue radiale de la chambre de combustion (22) ;
une paroi structurelle (36) coaxiale avec et entourant la paroi d'allumeur (32) ; et
un passage de sortie (34) défini par la paroi d'allumeur (32) à l'intérieur du bout (14), le passage de sortie (34) étant relié fluidiquement à la chambre de combustion (22) ;
dans lequel la paroi structurelle (36) et la paroi d'allumeur (32) sont configurées pour un niveau de pression à l'intérieur d'un boîtier de combusteur (20) du combusteur (26) pendant fonctionnement du combusteur (26), dans lequel
une section d'admission d'air (29) est située à l'intérieur de la paroi structurelle (36) et de la paroi d'allumeur (32), de sorte que la section d'admission d'air (29) alimente directement la chambre de combustion (22) ; et **caractérisé en ce que**
une section d'injection de carburant (31) reçoit l'air provenant de la section d'admission d'air (29) et d'un raccord d'admission de carburant (30) et pulvérise le carburant avant qu'il n'entre dans la chambre de combustion (22).

2. Allumeur torche (10) selon la revendication 1, dans lequel le bout (14) comprend un coude (40) en aval de la chambre de combustion (22), et éventuellement dans lequel le coude (40) tourne de 90 degrés par rapport à l'axe d'allumeur torche.

3. Allumeur torche (10) selon la revendication 1 ou 2, dans lequel une bride (39) est reliée au boîtier de combusteur (20) du moteur à turbine à gaz et maintient l'allumeur torche (10) à l'intérieur d'une ouverture du boîtier de combusteur (20).

4. Allumeur torche (10) selon l'une quelconque des revendications 1, 2 ou 3, dans lequel l'allumeur torche (10) est adapté à allumer le carburant dans une zone de recirculation extérieure (50) du combusteur (26), ou dans lequel l'allumeur torche (10) est adapté à allumer le carburant dans une zone de recirculation intérieure (52) du combusteur (26).

5. Allumeur torche (10) selon l'une quelconque des revendications 1 à 4, dans lequel le capuchon (18) est configuré pour recevoir au moins trois allumeurs de surface (28).

6. Allumeur torche (10) selon l'une quelconque des revendications 1 à 5, dans lequel le boîtier de combusteur (20) s'étend le long d'une ligne centrale de combusteur primaire et l'allumeur torche (10) est orienté de sorte que l'axe d'allumeur torche s'étend radialement vers l'intérieur par rapport à la ligne centrale de combusteur primaire.

7. Combusteur d'un moteur à turbine à gaz orientée autour d'un axe de moteur, le combusteur comprenant :
l'allumeur torche (10) selon la revendication 1 ;
un boîtier de combusteur (20) s'étendant le long d'une ligne centrale de combusteur primaire afin de transporter un écoulement d'air comprimé à partir d'un compresseur vers une section de turbine, le boîtier de combusteur (20) comprenant l'ouverture de l'allumeur torche (10) ;
une chemise de combusteur (24) disposée à l'intérieur du boîtier de combusteur (20) pour définir une zone de combusteur principale ;
au moins une buse de carburant (27) située au niveau d'une extrémité amont de la chemise de combusteur (24), par rapport à la ligne centrale de combusteur primaire ; et
dans lequel l'allumeur torche (10) est situé à l'intérieur de l'ouverture de l'allumeur torche de sorte que le bout (14) soit monté à travers la chemise de combusteur (24), la chambre de combustion (22) se trouve à l'intérieur du boîtier de combusteur (20), et le capuchon (18) s'étend à travers le boîtier de combusteur (20).

8. Combusteur selon la revendication 7, dans lequel l'allumeur torche (10) est orienté de sorte que l'axe d'allumeur torche s'étend radialement vers l'intérieur par rapport à la ligne centrale de combusteur primaire et à l'axe de moteur.

9. Combusteur selon la revendication 7 ou 8, dans lequel le bout (14) comprend le coude (40) entre la chambre de combustion (22) et la chemise de combusteur (24), et éventuellement dans lequel le coude (40) tourne de 90 degrés à partir de la chambre de combustion (22) vers la chemise de combusteur (24).

10. Combusteur selon les revendications 3 et 7, dans lequel la bride (39) est reliée au boîtier de combusteur (20) et maintient l'allumeur torche (10) à l'intérieur de l'ouverture de l'allumeur torche (10) et au boîtier de combusteur (20).

11. Combusteur selon la revendication 7, dans lequel le bout (14) de l'allumeur torche (10) est montée à la chemise de combusteur (24) à une extrémité amont axiale de la chemise de combusteur (24) par rapport à la ligne centrale de combusteur primaire.

12. Combusteur selon la revendication 11, dans lequel l'allumeur torche (10) allume le carburant dans la zone de recirculation extérieure (50) du combusteur (26), ou dans lequel l'allumeur torche (10) allume le carburant dans une zone de recirculation intérieure (52) du combusteur (26).

13. Combusteur selon la revendication 7, dans lequel l'axe d'allumeur torche est orienté perpendiculairement à la ligne centrale de combusteur primaire.

14. Combusteur selon une quelconque revendication précédente, dans lequel le capuchon (18) est configuré pour recevoir au moins trois allumeurs de surface (28).

15. Combusteur selon la revendication 7, dans lequel l'allumeur torche (10) est positionné entre deux buses de carburant (27) du combusteur (26).
